# EUROPEAN PATENT SPECIFICATION

(11) **EP 3 788 573 B1**
(45) Date of publication and mention of the grant of the patent: **07.06.2023**
(21) Application number: 18723759.9
(22) Date of filing: 30.04.2018
(51) Int. Cl.: G06Q 10/08, B61B 13/10

(54) **TRANSPORT, STORAGE AND SEQUENCING SYSTEM FOR GOODS**
TRANSPORT-, LAGER- UND SEQUENZIERUNGSSYSTEM FÜR WAREN
SYSTÈME DE TRANSPORT, DE STOCKAGE ET DE SÉQUENCEMENT POUR MARCHANDISES

(43) Date of publication of application: 10.03.2021
(73) Proprietor: Cargo Sous Terrain AG, 4053 Basel (CH)
(72) Inventor: SUTTERLÜTI, Peter, 3063 Ittigen (CH); NOSER, Stephanie, 3072 Ostermundigen (CH); WIENER, Daniel, 4058 Basel (CH)
(74) Representative: Keller Schneider Patent- und Markenanwälte AG
(86) International application number: PCT/EP2018/061044
(87) International publication number: WO 2019/210935

(56) References cited:
- EP-A1- 1 690 811
- EP-A1- 1 862 412
- WO-A1-2007/000188
- WO-A1-2017/096989
- CN-U- 205 453 241
- DE-A1- 4 032 227
- JP-A- S58 212 529
- US-A- 1 733 409
- US-A- 1 822 111
- US-A- 3 958 512
- US-A- 4 147 248
- US-A1- 2007 084 698
- US-A1- 2011 127 142
- US-B1- 9 505 559
- Siemens Ag: "Conveyor technology for every application - Individual system solutions from Siemens", , 30 April 2015 (2015-04-30), XP055507847, Retrieved from the Internet: URL:https://w3app.siemens.com/mcms/infocen ter/dokumentencenter/mc/Documentsu20Brochu res/Conveyor-technology-enriched-en.pdf [retrieved on 2018-09-18]
- Wikipedia: "Battery electric multiple unit - Wikipedia", , 29 March 2018 (2018-03-29), XP093003301, Retrieved from the Internet: URL:https://en.wikipedia.org/w/index.php?t itle=Battery_electric_multiple_unit&oldid= 833007592 [retrieved on 2022-11-29]
- Wikipedia: "Uncrewed vehicle - Wikipedia", , 5 March 2018 (2018-03-05), XP055983104, Retrieved from the Internet: URL:https://en.wikipedia.org/w/index.php?t itle=Uncrewed_vehicle&oldid=828839662 [retrieved on 2022-11-18]

## Description

### Technical Field

The invention relates to a transport, storage and sequencing system for goods as well as to a method for transporting, storing and sequencing goods using such a transport, storage and sequencing system.

### Background Art

A number of means for transporting goods are I<nown. Some of those means are based on non-dedicated infrastructure, such as automotive transport on (public) roads. Usually, the establishment of a transport system on existing infrastructure (such as building up a truck fleet) is comparably simple and non-expensive. However, the existing infrastructure may be congested, and there will be further users and user categories that might have priority. This leads to a reduction of capacity and predictability (e. g. of transport duration and delivery time).

Accordingly, systems based on a dedicated infrastructure have been proposed.

As an example, US 9,505,559 B1 (Amazon Technologies, Inc.) relates to a dedicated networl< delivery system. It includes subterranean or aboveground elements for transporting items in both vertical and horizontal directions. The elements may be driven by or along one or more conveyors or rails, and may comprise one or more pressure-controlled carriers within a vacuum environment or among any type of fluid.

At least some of these I<nown dedicated transport systems are rather inflexible. They require the provision of a specific kind of objects in a predetermined sequence and then transport the sequence of objects to the destination as fast as the current capacity of the system permits. At the destination, the objects will be picl<ed up and transported further. Providing objects to the system and/or handling objects transported by the system may be complex and time-consuming.

A dedicated transport system similar to the system described herein is also I<nown from videos on the YouTube^{®} channel of Cargo sous terrain (https://www.youtube.com/watch?v=r11X-zMF_pc).

### Summary of the invention

It is the object of the invention to create a transport, storage and sequencing system for goods pertaining to the technical field initially mentioned, that provides an enhanced flexibility.

The solution of the invention is specified by the features of claim 1. According to the invention, the transport, storage and sequencing system comprises
a) at least two access stations;
b) a dedicated bidirectional transport way, comprising two transport lanes for accommodating a plurality of transport units running in both directions, along a transport route linking the at least two access stations;
c) the transport way comprising a service lane extending along an essential proportion of the transport route, the transport units being selectively divertable between the transport lanes and the service lane;
d) a control system for controlling movement of the plurality of transport units in such a way that
   - selected transport units are temporarily stored on the service lane for a determinable time interval; and/or
   - a sequence of transport units is modified using the service lane in preparation of further processing of a subset of the transport units in one of the access stations and/or in a subsequent transporting stage.

Preferably, the control system is capable of controlling movement of the transport units in such a way that temporary storage as well as modification of the sequence is possible.

The bidirectional transport way is dedicated, i. e. it is independent from existing infrastructure (such as roads, railway lines, etc.) and will be exclusively used in the context of the inventive system, i. e. the entire capacity of the transport way may be managed and used by the system.

Access stations may be placed in locations where senders and/or recipients are concentrated. In particular, access stations may be placed in industrial areas where goods are produced or provided as well as in or close to commercial areas where goods are sold in stores or restaurants. In addition, access stations may be placed close to residential areas where goods are delivered to, as well as close to sources, repositories and processing areas of recyclable goods.

The service line extends along an essential proportion of the transport route. This means that it is not restricted to specific service sections or access points but is an integral part of the transport way. The service line thereby extends along at least 66%, in particular at least 75%, of the transport route.

The selective diversion between the transport lanes and the service lane may be embodied in different ways, in particular depending on the underlying technology of the transport way and the transport units. In most preferred embodiments, a diversion between the transport lanes and the service lane is possible in essentially a random position of the transport route. Diversion may be effected controlling the transport unit (e. g. by steering a vehicle forming part of the unit).

The control system may be a central control system for the transport, storage and sequencing system controlling the transport way as well as the transport units. The control system comprises components for centralized control as well as components for controlling individual transport units. The latter are arranged locally on the transport units and cooperate with sensors and drives of the transport units.

Temporary storage of the transport units is not restricted to simple buffering, which may be needed when a certain section of the transport way is not available, but temporary storage allows for fulfilling storage needs of the users within the inventive system where in other cases additional warehouses or storage facilities would have been needed. The transport units may be temporarily stored despite the fact that a transport way between the current location of certain goods and their destination is available. Typical temporary storage times may be in the range of 30 minutes to several days. Temporary storage is part of the service provided by the operator of the inventive transport, storage and sequencing system and may be invoiced together with the transport services.

Sequencing, i. e. modifying the sequence of transport units in preparation of further processing of a subset of the transport units in one of the access stations and/or in a subsequent transporting stage may have in particular one or both of the following purposes:
i) collecting a number of transport units that may be further processed by handling devices of the access stations; the choice of the transport units may be based on outer dimensions and/or weight of the transport units;
ii) collecting a number of transport units containing goods that have a common destination (recipient or recipient area).

A method for transporting, storing and sequencing goods using a transport, storage and sequencing system as described above, comprises the following steps:
a) accepting the goods at a first of at least two access stations;
b) transporting the goods from the first access station to a second of the at least two access stations, using a dedicated bidirectional transport way, comprising two transport lanes for accommodating a plurality of transport units running in both directions, along a transport route linl<ing the at least two access stations, the transport way comprising a service lane extending along an essential proportion of the transport route, the transport units being selectively divertable between the transport lanes and the service lane;
c) temporarily storing selected transport units on the service lane for a determinable time interval;
d) modifying a sequence of transport units using the service lane in preparation of further processing of a subset of the transport units in one of the access stations and/or in a subsequent transporting stage;
e) providing the transported goods at the second access station for retrieval or further transport.

Therefore, the transport way is not only used for the actual transportation of the goods but also for temporary storage and preparation of the goods for further handling steps.

Accordingly, the inventive system and method allow for a flexible transport and (temporary) storage of a variety of goods. Space for handling systems and temporary storage, e. g. in the access stations, may be minimized.

Preferably, the control system is adapted to receive a transportation order specifying a pickup location, a pickup time, a delivery location and a delivery time, and the control system controls a transport of respective goods from the pickup location via a first of the at least two access stations, the transport way and a second of the at least two access stations to the delivery location, including the step of temporarily storing the goods on the service lane of the transport way if required to meet the delivery time.

Accordingly, the system is controlled in such a way that the entire transport process from pickup to delivery as well as temporary storage is based on a single order. The system is free to store the goods whenever and wherever it is deemed to be appropriate. Exceptions may apply for specific categories of goods: As an example, perishable goods (such as foodstuffs or pharmaceuticals) may be temporarily stored in specific areas where certain conditions with respect to temperature and humidity are ensured. In systems where the average transport time is much shorter than applicable temporary storage times these conditions do not need to be fulfilled along the entire transport route, but the respective goods may be packaged in an appropriate way or the transport units may be provided with devices for cooling or humidifying.

Usually, the pickup and delivery times will be time intervals during which a specific article will be picked up (or provided by the sender) or delivered to the recipient, respectively. The duration of the time intervals may range typically from several minutes to several hours, wherein shorter intervals (in particular for delivery) may relate to higher (and thus more expensive) service levels.

The system and method may foresee orders with an open delivery time, where the delivery time (and possibly the specific delivery location) are provided at a later stage. Up to at least this point in time the goods will be temporarily stored in the system. This makes sense if a certain demand can be reliably predicted (e. g. with the help of previous experience and based on big data analysis), and allows for quickly triggering the delivery process as soon as the expected order has arrived. Thus, the delivery process is greatly accelerated because the goods are already in the transport system and just need to be transported to the appropriate access station for further transport.

Advantageously, temporary storage on the service lane is managed by a dynamic storage regime with respect to choosing storage space areas of the service lane and storage locations for goods in the storage space areas. This allows for exploiting the freedom with respect to transporting and storing the goods and to optimize the efficiency, thus improving the cost-benefit ratio of the system. As an example, a combined transport and storage process for a product may tal<e one of the following forms:
i) accept - store - transport - deliver;
ii) accept - transport I - store - transport II - deliver;
iii) accept - transport - store - deliver
(as a matter of course, more complicated sequences are possible).

If required, sequencing steps may be carried out at any time between acceptance and delivery.

Essentially the entire transport way is accommodated in the tunnel and the only connections to the surface are the access stations. The inventive system and method are particularly advantageous as the volume of required caverns for the access stations may be minimized due to temporary storage and preparatory handling operations being performed in the tunnel.

Preferably, the at least two access stations comprise a vertical feeding system for feeding the transport units between the transport way and a transfer station on the surface. In particular, the vertical feeding system comprises elevator-like elements for vertically moving the transport units.

Preferably, in the area of the vertical feeding system, the transport way features a bypass, such that transport units travelling to another access station may pass the respective access station unaffected.

In alternative embodiments, ramps are provided for moving the transport units from the subterranean level of the transport way to the surface. Compared to vertical feeding systems, they need more space and require larger caverns for the access stations.

The transport way comprises a driving surface, the transport units are autonomous vehicles running on the driving surface and the transport lanes and the service lane are arranged side by side on the driving surface. The autonomous vehicles comprise their own driving engines, steering mechanism, drive and navigation control as well as necessary sensors. Employing autonomous vehicles allows for decentralizing the control of the transport units, using a driving surface in connection with autonomous vehicles ensures maximum flexibility due to the fact that lane changes and diversions between transport and service lanes are possible in essentially random locations. Furthermore, it is possible to couple several vehicles belonging together.

Each of the transport units comprise an electrical energy store and the electrical energy store is chargeable from a power supply integrated in the driving surface. This allows for employing a power supply having a simple structure as it is not required that the transport units are able to draw electrical energy in all possible positions. The power supply is be provided by linear inductive conductors extending along the transport lanes. During a lane change or when accommodated by the service lane, the transport units will draw electrical energy from the integrated energy store. The energy store may be embodied by means I<nown as such lil<e rechargeable batteries, hydrogen based storage technology and/or (super-)capacitors.

The transport units are controllable to relocate themselves during processing in the access stations. Again, this is greatly facilitated if the transport units comprise an electrical energy store. In particular, the transport units may autonomously leave the transport way and move into a feed unit of a vertical feeding system (such as an elevator) as well as leaving the feed unit and move to a further handling unit. They may as well change their relative arrangement in view of future transport or handling steps.

In a preferred embodiment, the system comprises an additional transport way for transporting individual goods of limited dimensions independent from the dedicated bidirectional transport way. In particular, the additional transport way and the (first) dedicated bidirectional transport way use a common infrastructure such as a common (subterranean) tunnel, a common building, a common power supply system, etc. Preferably, the control system controls both transport ways such that the actions of both may be coordinated.

Having an additional transport way allows for independently transporting goods of different nature such as palletized goods on one hand and single parcels on the other hand. The two transport ways may have different transport speeds and capacities. In particular, the additional transport way may be operated at a higher speed.

Preferably, the additional transport way comprises an overhead conveyor for the transport of suspended containers for accommodating the individual goods. This allows for a simple and rapid transport of smaller pacl<agings and individual parcels. It is particularly advantageous to combine and integrate such a kind of additional transport way with a first transport way comprising a driving surface, the transport units being autonomous vehicles running on the driving surface. In this case, the overhead conveyor may be used for servicing purposes for the first (main) transport way. As an example, movable video cameras for the inspection of the driving surface may be moved along the transport route, suspended by the overhead conveyor.

In a preferred embodiment, a production facility is integrated in one of the at least two access stations, wherein basic materials, consumables, semi-manufactured products and/or final products are supplied and removed via the transport way. This allows for the construction and operation of a distributed highly automated manufacturing system. The transport paths of the basic materials, consumables, semi-manufactured products and final products are minimized, and the system constitutes a temporary storage for all the goods involved in the production process. The transport way may be employed as well for the collection of recyclables and refuse.

In principle, application of this approach is not restricted to transport, storage and sequencing systems featuring a service lane extending along an essential proportion of the transport route and/or systems where temporary storage on a service lane or the modification of a sequence of transport units is effected using the service lane. The approach may be generally applied to systems comprising at least two access stations and a dedicated bidirectional transport way comprising two transport lanes for accommodating a plurality of transport units running in both directions, along a transport route linking the at least two access stations.

Preferably, the system comprises a secondary transport system running on a non-dedicated transport infrastructure, goods being transferable between the transport way and the secondary transport system at the at least two access stations, the control system disposing transport of the goods along both the transport way and the secondary transport system. Integrating transport on the dedicated infrastructure of the system as well as on a non-dedicated infrastructure allows for fulfilling comprehensive end-to-end transport orders, from an initial sender to a final recipient, even in cases where neither the sender nor the recipient are directly connected to the primary dedicated transport system. This greatly simplifies the handling by the users of the system. The characteristics and operation of the secondary transport system may be adjusted to the specific performance characteristics of the inventive transport, storage and sequencing system, including its IT-based technical and operational controlling and timing capacities. In the context of systems having an additional transport way such as based on an overhead conveyor, a transfer to and from the secondary transport system is enabled as well.

In principle, application of this approach is not restricted to transport, storage and sequencing systems featuring a service lane extending along an essential proportion of the transport route and/or systems where temporary storage on a service lane or the modification of a sequence of transport units is effected using the service lane. The approach may be generally applied to systems comprising at least two access stations and a dedicated bidirectional transport way comprising two transport lanes for accommodating a plurality of transport units running in both directions, along a transport route linking the at least two access stations.

Advantageously, the secondary transport system comprises a plurality of autonomous vehicles running on a public street infrastructure, the goods being automatically transferable between the transport units and the autonomous vehicles of the secondary transport system at the at least two access stations. Thereby, a highly automated and flexible transport, storage and sequencing system is created which can essentially reach all senders and recipients and where the use of non-dedicated (public) infrastructure is minimized. The transport units may be constructed in such a way that they may autonomously reach certain destinations on the surface, close to the access stations, which means that the further autonomous vehicles may be saved in these cases.

Alternatively, the vehicles running on the public street infrastructure are not autonomous or autonomous and non-autonomous vehicles are combined.

Other advantageous embodiments and combinations of features come out from the detailed description below and the entirety of the claims.

### Brief description of the drawings

The drawings used to explain the embodiments show:
- Fig. 1: a schematic representation of an embodiment of a transport, storage and sequencing system according to the invention;
- Fig. 2: a schematic cross-sectional image of the tunnel tube;
- Fig. 3A, 3B: schematic oblique views of autonomous vehicles for the inventive transport, storage and sequencing system;
- Fig. 4A, 4B: vertical and horizontal cross-sections through a cavern of an access station of the inventive transport, storage and sequencing system;
- Fig. 5: the extension from three to four lanes in the cavern region; and
- Fig. 6: a block diagram of the control architecture of the inventive transport, storage and sequencing system.

In the figures, the same components are given the same reference symbols.

### Preferred embodiments

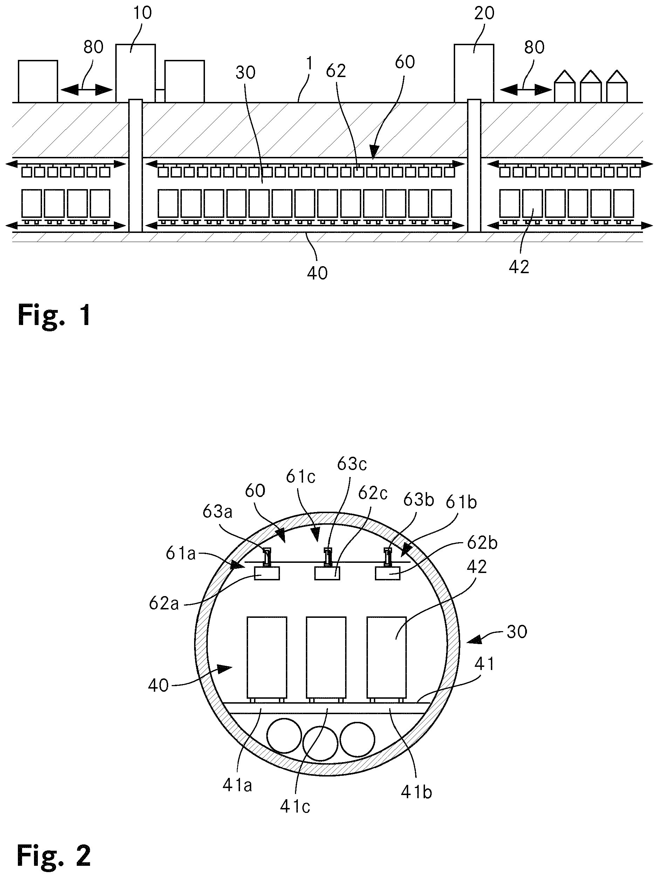

The Figure 1 shows a schematic representation of an embodiment of a transport, storage and sequencing system according to the invention. The system includes fully integrated production, storage and transport facilities that are controlled by a digital platform. The system comprises access stations 10, 20 extending from the surface 1 to a subterranean level. On the subterranean level, the access stations 10, 20 are connected by a tunnel tube 30 comprising a three-lane transport way 40. Autonomous vehicles 42 circulate on the transport way 40, each vehicle offering a transport (or storage) capacity of up to 2 EUR-pallets (having a basic surface of 1'200 x 800 mm and a height up to 2'400 mm). The tunnel tube 30 further houses an overhead conveyor system 60 for the transport of suspended carriages 62 that may carry containers of up to 600x400x400 mm each.

The system not only serves to transport goods from one of the access stations 10, 20 to another but also provides substantial storage facilities that may be dynamically administered. In particular, the middle one of the three lanes of the transport way 40 may be used for storage purposes in addition to service purposes. It is to be noted that in principle a designated service lane is not required. Instead, in each section of the transport way 40 one of the three lanes may be (temporarily) designated to be the current service lane and the usual transports may be operated on the further two lanes. Nevertheless, for simplicity, in the following it is assumed that the middle lane is the service lane.

Accordingly, if one of the autonomous vehicles 42 changes from a transport (side) lane to the middle lane and is parked on the middle lane its status changes from a transport vehicle to a temporary storage container.

On the surface, the access stations 10, 20 are connected to the sources and destinations of the goods by a ground transport system 80, including autonomous vehicles that may be loaded and unloaded in a fully automated way and that circulate on public roads.

When leaving the transport way 40 in the subterranean tunnel 30, the goods are already collated and sequenced in view of the further distribution, such that the transport and loading process in the access point 10, 20 is greatly simplified.

Combining a subterranean wide-area transport network with a surface local-area transport network leads to a substantial reduction of goods traffic on surface infrastructure such as public roads or railway lines. This leads to an increased capacity for other transports, e. g. people transport, and reduces noise and pollution.

The inventive system may as well be employed for waste disposal and recycling purposes. Thereby, the transport of empty vehicles or containers may be reduced, and the capacity utilization of the system is increased.

Figure 2 shows a schematic cross-sectional image of the tunnel tube. The tunnel tube 30 has an interior diameter of 6.3 m and runs in a depth of at least 20-40 m below the surface.

A flat driving surface 41 of the transport way 40 is accommodated in the tunnel tube 30, featuring three parallel lanes 41a, 41b, 41c, a first lane 41a for transport in a first direction, a second lane 41b for transport in a second direction and a third lane 41c, arranged in between the first and the second lane 41a, 41b. The third lane 41c is called the "service lane", the first and second lanes 41a, 41b are "transport lanes". The service lane 41c is used for servicing purposes, as a backup lane if vehicles 42 block one of the other lanes 41a, 41b and for storage and buffering purposes. Furthermore, the service lane 41c allows for modifying the sequence of vehicles 42 in that vehicles 42 may overtal<e others by temporarily switching to the service lane. On the service lane 41c, there is no predetermined direction of movement, but the vehicles 42 may move in either direction or stand still. In their storage mode, the vehicles 42 are parked on the service lane 41c for a given time interval.

The tunnel tube 30 further accommodates an overhead conveyor system 60 including three suspended tracks 61a, 61b, 61c as described in more detail below. Furthermore, the tunnel tube 30 accommodates power and data lines, antennae for communication links as well as protection systems such as fire and smoke detectors, a fire sprinkling system, an extraction system for smoke gases, etc. Some of these components are accommodated below the driving surface, others are arranged along the side walls or above the suspended tracks.

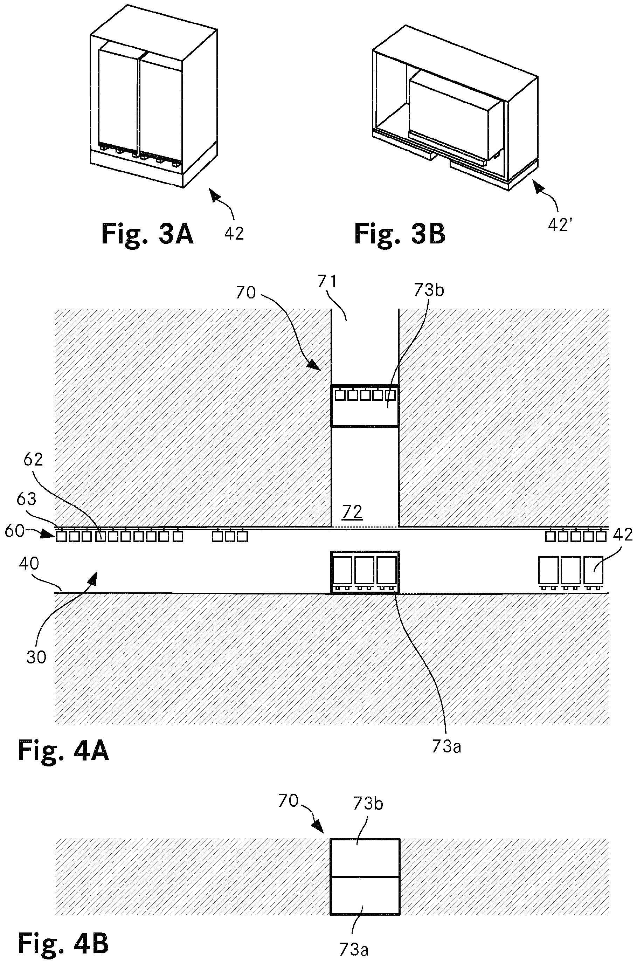

The Figures 3A, 3B are schematic oblique views of autonomous vehicles for the inventive transport, storage and sequencing system. The autonomous vehicles 42 are flat bed trucks comprising four wheels, whereof at least two are steerable. At least two of the wheels are driven by electric drive motors. Induction loops are integrated into the driving surface, and the vehicles 42 draw electrical energy from the induction loops as long as they are accommodated on the driving surface. Electrical energy may be temporarily stored in batteries provided on the vehicles 42. The vehicles 42 may change between lanes essentially everywhere along the transport way.

The vehicles are designed in such a way that goods may be automatically loaded and unloaded. In particular, the first type of vehicles 42 shown in Figure 3A comprise a loading area for accepting 2 EUR pallets (single vehicle, maximum weight 2'000 kg). A second type of vehicles 42' shown in Figure 3B comprises two flat bed vehicles coupled to a common carrier frame accommodating 4 EUR pallets (double vehicle, offering a loading area having a length of 3 m, maximum weight 3'500 kg). The maximum loading height of both types is 2.4 m.

Besides the vehicles for transporting pallets other types of autonomous vehicles, e. g. vehicles provided with a cooling equipment, may be employed. In the tunnel, the vehicles have a substantially constant transport speed of 8 m/s. It is possible to couple two up to six vehicles in order to form a train. Depending on operational needs, the system-wide transport speed may be adapted (e. g. to 5 m/s). Due to the fact that this allows for substantially reducing the safety distances between consecutive vehicles, this allows for a substantial increase in transportation capacity.

As mentioned, an overhead conveyor system 60 is further housed in the tube. This conveyor system 60 comprises three parallel rails 63a, 63b, 63c and carriages 62a, 62b, 62c suspended by these rails 63a, 63b, 63c, wherein each carriage 62a, 62b, 62c may carry a container up to 600x400x400 mm and a weight of up to 50 1<g. The transport speed of the overhead conveyor system 60 is about 12-16 m/s. Accordingly, small goods may be transported more rapidly than using the driving-surface-bound vehicles.

Again, the drives of the carriages 62a, 62b, 62c are provided by electrical power through an inductive connection, and the carriages 62a, 62b, 62c comprise a local energy store, which allows for driving the carriages 62a, 62b, 62c even in sections with a temporary power outage. Track switches are arranged between the three overhead tracks 61a, 61b, 61c allowing for moving the carriages 62a, 62b, 62c between the respective transport track and the service tracl<.

The system further comprises remote controlled monitoring and service carriages, provided by cameras.

The Figure 4A shows a vertical cross-section through a cavern of an access station of the inventive transport, storage and sequencing system, the Figure 4B shows a horizontal cross-section. The access stations 10, 20 constitute an interface between the tunnel based transport way 40 and further means of transport. The access stations 10, 20 allow for a fully automated loading and unloading of the autonomous vehicles 42 running on the subterranean transport way 40 as well as of the carriages 62 suspended by the rails 63 of the overhead conveyor system 60. Loading and unloading is always effected in the upper levels of the access stations 10, 20 and is usually carried out by fully automated devices, including automated guided vehicles (AGV), stacker cranes or loading/unloading stations. Manual loading and unloading is possible, especially for the handling of exceptional goods.

The (loaded or empty) vehicles 42 and carriages 62 are moved between the transport way 40 and the surface by means of a vertical feeding system 70. The elevators of the vertical feeding system 70 are accommodated in a lifting chamber 71 extending from the surface into a cavern 72 on the tunnel level. The elevators are driven by electrical drives with energy recuperation.

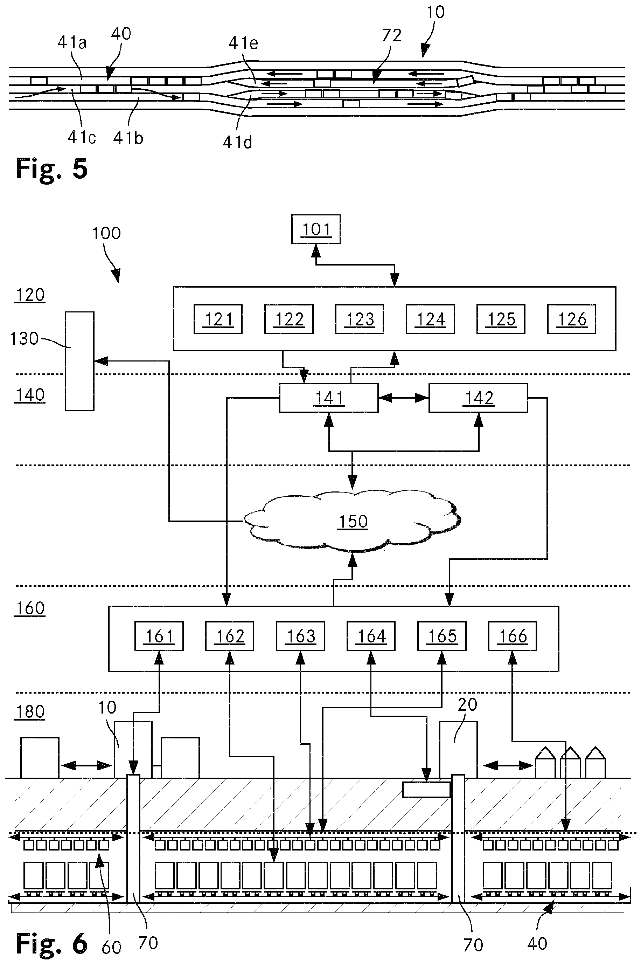

The cavern 72 of the access station shown in Figures 4A, 4B houses two elevators 73a, 73b which may be moved between the cavern 72 and the surface in the lifting chamber 71. The elevator 73a cooperates with a first lane 41d, whereas the other elevator 73b cooperates with a second lane 41e (cf. Fig. 5). The vertical position of the elevators 73a, 73b may be adjusted such that the elevator 73a, 73b cooperates with the respective lane 41d, 41e of the transport way 40 or the corresponding track of the overhead conveyor system 60. Each elevator 73a, 73b may accommodate 6 EUR-pallets or 3 autonomous vehicles.

Each vertical feeding system 70 comprising two independent elevators 73a, 73b ensures that even in case of a feeder outage the operation in the access station 10 may be upheld with half of the capacity.

Due to their energy storage, the autonomous vehicles 42 may circulate autonomously not only on the driving surface of the subterranean transport way 40 but also in the vertical elevators 73, the upper levels of the access stations or even outside the access stations. This allows for dispensing with complicated feeding systems inside the access stations.

In the cavern region, the tunnel and the driving surface are extended from three to four lanes, as shown in Figure 5. Outside the access station 10, the transport way 40 features three lanes 41a, 41b, 41c. When entering the cavern 72 of the access station 10, the middle lane 41c is split into two lanes 41d, 41e (cf. also Figure 4B). Each of these new inner lanes 41d, 41e is connected to one of the outer lanes 41a, 41b via an upstream fork as well as a downstream forl<. Vehicles that pass the respective access station 10 are moved in the outermost lanes 41a, 41b; vehicles that leave the transport way 40 in the respective access station 10 move on one of the inner lanes 41d, 41e. The inner lanes lead into the vertical feeding system 70 comprising the vertical elevators 73. In the entrance regions of the caverns 72, the vehicles 42 are distributed, accelerated and deaccelerated and sorted for the vertical feeding system 70.

The vertical feeding system 70 moves as well the carriages 62 of the overhead conveyor system 60. For that purpose, the respective carriages 62 move from the rails 63 running in the tunnel tube 30 on a further rail element arranged within an elevator 73 of the vertical feeding system 70.

The access stations further comprise a personnel and material elevator for servicing purposes having a maximum load of 150 1<g. Furthermore, every lifting chamber is provided by ladders.

On the surface, the access stations allow the automated unloading of the goods from the autonomous vehicles 42 and the automated loading to further means of transport, such as autonomous vehicles running on the public roads (see below). Furthermore, the access stations 10, 20 are transfer sites for return goods, recycling goods or waste and they may be used for further services like cross docking or packing.

The subterranean transport system is coupled to a ground transport system 80, in particular for reaching the actual senders or recipients in the vicinity of an access station 10, 20. In particular, the access stations are located in industrial and urban centers, and the ground transport system ("city and intercity logistics") connects the respective access station with the senders and recipients in its vicinity. The number of trips is minimized by intelligently bundling goods that originate from a similar location and/or are delivered to a similar location as well as by combining delivery and pick up orders in the same trip. The logistics, operation and management of the ground transport system 80 as well as of the access stations and the underground transport way are closely integrated. This allows for maximum efficiency and ensures that the customers receive one-stop shop service from endpoint to endpoint.

On one hand, the surface transport system 80 is based on vehicles that are available today (trucks, vans, etc.). However, on the other hand it comprises a number of autonomous vehicles that may be automatically loaded and unloaded, and which autonomously drive to an available parking space in the vicinity of the access station if they are not currently used. Reloading sites may be provided in a certain distance of the access stations 10, 20, such that the goods are transported to the reloading sites by the autonomous vehicles and reloaded to specific vehicles for the final delivery. Similarly, goods to be shipped are collected from the senders via conventional means, transported to the reloading sites, bundled and transported underground to the nearest access station by an autonomous vehicle.

Finally, the access stations comprise pick up stations for picking up goods by the final recipients.

The Figure 6 is a block diagram of the control architecture of the inventive transport, storage and sequencing system. All stages of the transport, from the sender to the recipient, comprising dynamic procedures, are fully integrated in the inventive system. This simplifies the whole process for the user and avoids unproductive waiting times. The coordination of all stages is achieved by means of a cloud-based secured IT platform 100 offering interfaces 101 for the customers (such as call centers or webservice interfaces) and the operator of the system and controlling the information flow between all the involved players.

The IT platform 100 is structured in four levels: The supply chain management (SCM) level 120, the coordination level 140, the control level 160 and the field level 180. The IT platform 100 heavily relies on a level-independent cloud service 150.

The SCM level 120 comprises the following modules:
a) a planification and control module 121;
b) a management module 122;
c) a transport management module 123;
d) a billing module 124;
e) a monitoring module 125; and
f) a simulation module 126.

All modules 121... 126 interact with the cloud service 150 for data storage and retrieval.

The coordination level 140 comprises a traffic management module 141, receiving scheduling data from the SCM level 120 and delivering error messages to the SCM level 120 as well as to the system control module 142 of the coordination level 140. Again, both modules 141, 142 interact with the cloud service 150 for data storage and retrieval. The traffic management module 141 delivers control orders to the control level 160, and the system control module 142 delivers system orders to the control level 160.

Based on the data stored by the cloud service 150, a situation report may be automatically established by a corresponding reporting module 130.

The control level 160 comprises the following components, controlled by the coordination level 140:
a) the vertical feeding system control module 161 for controlling the vertical feeding systems 70 of the access stations 10, 20;
b) the autonomous vehicle control module 162 controlling the autonomous vehicles 42 running on the subterranean transport way 40;
c) the overhead conveyor system control module 163 for controlling the track switches and carriages of the overhead conveyor system 60;
d) the high voltage control module 164 for controlling all high voltage components of the system;
e) the data network 165; and
f) the detector network 166.

The main characteristics of the control system are the following:
i) the utilized capacity of the surface transport means is maximized, thereby reducing the number of trips required;
ii) temporary storage is done in the subterranean tunnel, thus reducing the required space on the surface; and
iii) as much as possible, collation and sequencing of the goods is done on the transport way in the subterranean tunnel, thus reducing the required space and time in the access stations.

The IT platform 100 not only controls, monitors and documents the transport, storage and sequencing process but also automatically invoices the provided services, including services provided by partner companies, e. g. with respect to surface transport, customs clearance, packaging, etc. The pricing may be demand-dependent and transport and storage slots may be sold by auction.

In case production facilities are integrated in the system's infrastructure, supplies are automatically managed. The same applies to the management of recycling materials and waste.

The system includes a data network which is available in the entire subterranean tunnel as well as the access stations and surface facilities. The data network transports technical data of the involved system components as well as logistics data relating to the transport, storage and sequencing processes. All information and data is stored in the cloud, according to predefined patterns and formats. The resulting large amount of data is analyzed by an analytics software of the control system as well as the traffic and warehouse management system. The traffic management provides and manages the transport slots, whereas the warehouse management provides and manages the storage slots and optimizes the usage of the storage area in the subterranean tunnel and of further warehouses, is applicable.

Monitoring of the system's components is supported by currently available Internet-of-Things technology (IoT). Basically, all components periodically report about their operating state, their location and other parameters, and the corresponding data is available to the IT platform for scheduling and troubleshooting purposes. Nevertheless, components such as the autonomous vehicles, palettes or containers in the subterranean tunnel as well as on the surface basically obtain a transportation (or storage) order including the pick up time (interval) and location as well as the delivery time (interval) and location. Based on this information, the vehicles will usually carry out the required steps autonomously, without requiring further control data from the system. This allows for dynamically developing and scaling the system and facilitates the handling of failures and outages.

The invention is not restricted to the described embodiment. Details of the system components as well as of the control system may be embodied differently.

In summary, it is to be noted that the invention create a transport, storage and sequencing system for goods that provides an enhanced flexibility.

## Claims

1. Transport, storage and sequencing system for goods, comprising
a) at least two access stations (10, 20);
b) a dedicated bidirectional transport way (40), comprising two transport lanes (41a, 41b) for accommodating a plurality of transport units (42, 42') running in both directions, along a transport route linl<ing the at least two access stations (10, 20);
c) the transport way (40) comprising a service lane (41c) extending along at least 66Y of the transport route, the transport units (42, 42') being selectively divertable between the transport lanes (41a, 41b) and the service lane (41c), essentially the entire transport way (40) being accommodated in a subterranean tunnel (30), the only connections to the surface (1) being the at least two access stations (10, 20);
d) a control system for controlling movement of the plurality of transport units (42, 42') in such a way that
- selected transport units (42, 42') are temporarily stored on the service lane (41c) for a determinable time interval; and/or
- a sequence of transport units (42, 42') is modified using the service lane (41c) in preparation of further processing of a subset of the transport units (42, 42') in one of the access stations (10, 20) and/or in a subsequent transporting stage
wherein
e) the transport units (42, 42') are controllable to relocate themselves during processing in the access stations (10, 20);
f) the transport way (40) comprises a driving surface (41) and the transport lanes (41a, 41b) and the service lane (41c) are arranged side by side on the driving surface (41);
g) the transport units (42, 42') are autonomous vehicles running on the driving surface (41),
**characterized in that**
h) the control system comprises components for centralized control as well as components for controlling individual transport units (42, 42') which are arranged locally on the transport units (42, 42') and which cooperate with sensors and drives of the transport units (42, 42');
i) the transport units (42, 42') comprise an electrical energy store which is chargable from a power supply integrated in the driving surface (41), said power supply being provided by linear inductive conductors extending along the transport lanes (41a, 41b).

2. Transport, storage and sequencing system as recited in claim 1, **characterized in that** the control system is adapted to receive a transportation order specifying a pickup location, a picl<up time, a delivery location and a delivery time, and **in that** the control system controls a transport of respective goods from the picl<up location via a first of the at least two access stations (10, 20), the transport way (40) and a second of the at least two access stations (10, 20) to the delivery location, including the step of temporarily storing the goods on the service lane (41c) of the transport way (40) if required to meet the delivery time.

3. Transport, storage and sequencing system as recited in claim 1 or 2, **characterized in that** temporary storage on the service lane (41c) is managed by a dynamic storage regime with respect to choosing storage space areas of the service lane (41c) and storage locations for goods in the storage space areas.

4. Transport, storage and sequencing system as recited in claim 3, **characterized in that** the at least two access stations (10, 20) comprise a vertical feeding system (70) for feeding transport units (42, 42') between the transport way (40) and a transfer station on the surface (1).

5. Transport, storage and sequencing system as recited in one of claims 1 to 4, **characterized by** an additional transport way for transporting individual goods of limited dimensions independent from the dedicated bidirectional transport way (40).

6. Transport, storage and sequencing system as recited in claim 5, **characterized in that** the additional transport way comprises an overhead conveyor (60) for the transport of suspended containers for accommodating the individual goods.

7. Transport, storage and sequencing system as recited in any of claims 1 to 6, **characterized in that** a production facility is integrated in one of the at least two access stations (10, 20), wherein basic materials, consumables, semi-manufactured products and/or final product are supplied and removed via the transport way (40).

8. Transport, storage and sequencing system as recited in any of claims 1 to 7, **characterized by** a secondary transport system (80) running on a non-dedicated transport infrastructure, goods being transferable between the transport way (40) and the secondary transport system (80) at the at least two access stations (10, 20), the control system disposing transport of the goods along both the transport way (40) and the secondary transport system (80).

9. Transport, storage and sequencing system as recited in claim 8, **characterized in that** the secondary transport system (80) comprises a plurality of autonomous vehicles running on a public street infrastructure, the goods being automatically transferable between the transport units (42, 42') and the autonomous vehicles of the secondary transport system (80) at the at least two access stations (10, 20).

10. Method for transporting, storing and sequencing goods using a transport, storage and sequencing system as recited in any of claims 1 to 9, comprising the following steps:
a) accepting the goods at a first of the at least two access stations (10, 20);
b) transporting the goods from the first access station to a second of the at least two access stations (10, 20), using the dedicated bidirectional transport way (40);
c) temporarily storing selected transport units (42, 42') on the service lane (41c) for a determinable time interval;
d) modifying a sequence of transport units (42, 42') using the service lane (41c) in preparation of further processing of a subset of the transport units (42, 42') in one of the access stations (10, 20) and/or in a subsequent transporting stage;
e) providing the transported goods at the second access station for retrieval or further transport.

11. Method as recited in claim 10, **characterized by** the steps of
- receiving a transportation order specifying a picl<up location, a picl<up time, a delivery location and a delivery time; and
- controlling the transport of the respective goods from the pickup location via a first of the at least two access stations (10, 20), the transport way (40) and a second of the at least two access stations (10, 20) to the delivery location, including the step of temporarily storing the goods on the service lane (41c) of the transport way (40) if required to meet the delivery time.

## Patentansprüche

1. Transport-, Lagerungs- und Ablaufsteuerungssystem für Güter, umfassend:
a) mindestens zwei Zugangsstationen (10, 20);
b) einen dezidierten, bidirel<tionalen Transportweg (40) umfassend zwei Transportspuren (41a, 41b) zur Aufnahme eine Mehrzahl an Transporteinheiten (42, 42'), welche entlang einer Fahrroute, welche die mindestens zwei Zugangsstationen (10, 20) verbindet, in den zwei Richtungen verl<ehren;
c) wobei der Transportweg (40) eine Servicespur (41c) umfasst, die sich über mindestens 66% des Transportweges (40) erstrecl<t, wobei die Transporteinheiten (42, 42') selel<tiv zwischen den Transportspuren (41a, 41b) und der Servicespur (41c) umgeleitet werden I<önnen, wobei im Wesentlichen der gesamte Transportweg (40) in einem unterirdischen Tunnel aufgenommen ist (30), dessen einzige Verbindungen zur Oberfläche (1) durch die mindestens zwei Zugangsstationen gegeben sind;
d) ein Steuerungssystem zum Steuern der Bewegungen der Mehrzahl an Transporteinheiten (42, 42') derart, dass:
- ausgewählte Transporteinheiten (42, 42') temporär auf der Servicespur (41c) für eine bestimmte Zeitdauer gelagert werden; und/oder
- eine Abfolge von Transporteinheiten (42, 42') durch Benutzung der Servicespur (41c) in Vorbereitung einer weiteren Abfertigung einer Teilmenge der Transporteinheiten (42, 42') in einer der Zugangsstationen (10, 20) und/oder in einem nachgelagerten Transportverfahren geändert wird;
wobei
e) die Transporteinheiten (42, 42') zum Umsetzen während ihrer Verarbeitung in einer der Zugangsstationen (10, 20) steuerbar sind;
f) der Transportweg (40) eine Fahrbahn (41) umfasst und die Transportspuren (41a, 41b) sowie die Servicespur (41c) nebeneinander auf der Fahrbahn (41) angeordnet sind;
g) die Transporteinheiten (42, 42') als autonome Fahrzeuge ausgestaltet sind, die auf der Fahrbahn (41) verkehren;
dadurch gel<ennzeichnet, dass
h) das Steuerungssystem Komponenten für eine zentrale Steuerung sowie Komponenten für die Steuerung einzelner Transporteinheiten (42, 42'), die lokal auf den Transporteinheiten (42, 42') angeordnet sind und mit Sensoren sowie Antrieben der Transporteinheiten (42, 42') zusammenwirl<en, aufweist;
i) die Transporteinheiten (42, 42') einen Stromspeicher umfassen, welcher durch eine Stromquelle, die in der Fahrbahn integriert ist, geladen werden I<önnen, wobei die Stromquelle als lineare indul<tive Leiter ausgestaltet ist, die sich entlang der Transportspuren (41a, 41b) erstrecl<en.

2. Transport-, Lagerungs- und Ablaufsteuerungssystem für Güter gemäss Anspruch 1, dadurch gel<ennzeichnet, dass das Steuerungssystem derart ausgestaltet ist, dass dieses einen Transportauftrag, der einen Abholort, eine Abholzeit, einen Lieferort und eine Lieferzeit definiert, empfangen kann, und dass dieses den Transport der entsprechenden Güter vom Abholort über eine erste der mindestens zwei Zugangsstationen (10, 20), dem Transportweg (40) und einer zweiten der mindestens zwei Zugangsstationen (10, 20) zum Lieferort steuert, umfassend einen Schritt, bei welchem die Güter temporär auf der Servicespur (41c) des Transportweges (40) gelagert werden, falls dies zum Einhalten der Lieferzeit nötig ist.

3. Transport-, Lagerungs- und Ablaufsteuerungssystem für Güter gemäss einem der Ansprüche 1 oder 2, dadurch gel<ennzeichnet, dass die temporäre Lagerung auf der Servicespur (41c) durch eine dynamische Lagerverwaltung in Bezug auf die Auswahl der Lagerbereiche auf der Servicespur (41c) sowie der Lagerungsorte der Güter in diesen Lagerbereichen gesteuert wird.

4. Transport-, Lagerungs- und Ablaufsteuerungssystem für Güter gemäss Anspruch 3, dadurch gel<ennzeichnet, dass die mindestens zwei Zugangsstationen (10, 20) über einen Vertil<alförderer (70) zum Fördern der Transporteinheiten (42, 42') zwischen dem Transportweg (40) und einer Umladestation auf der Oberfläche (1) verfügen.

5. Transport-, Lagerungs- und Ablaufsteuerungssystem für Güter gemäss einem der Ansprüche 1 bis 4, gel<ennzeichnet durch einen zusätzlichen Transportweg für den Transport von einzelnen Gütern mit beschränl<ten Abmessungen, der vom dezidierten bidirel<tionalen Transportweg (40) unabhängig ist.

6. Transport-, Lagerungs- und Ablaufsteuerungssystem für Güter gemäss Anspruch 5, dadurch gel<ennzeichnet, dass der zusätzliche Transportweg einen Überkopfförderer für die Förderung von hängenden Behältern umfasst.

7. Transport-, Lagerungs- und Ablaufsteuerungssystem für Güter gemäss einem der Ansprüche 1 bis 6, dadurch gel<ennzeichnet, dass eine Produl<tionseinrichtung in einer der mindestens zwei Zugangsstationen (10, 20) integriert ist, wobei Ausgangsmaterialien, Verbrauchmaterialien, Halbfabril<ate und/oder fertige Produl<te mittels des Transportweges (40) zu dieser hin- oder wegtransportiert werden.

8. Transport-, Lagerungs- und Ablaufsteuerungssystem für Güter gemäss einem der Ansprüche 1 bis 7, gel<ennzeichnet durch ein sel<undäres Transportsystem (80), welches eine nicht dezidierte Transportinfrastrul<tur verwendet, wobei Güter zwischen dem Transportweg (40) und dem sel<undären Transportsystem (80) in den mindestens zwei Zugangsstationen (10, 20) transferiert werden I<önnen, und wobei das Steuerungssystem den Transport der Güter über den Transportweg (40) sowie dem sel<undären Transportsystem (80) steuert.

9. Transport-, Lagerungs- und Ablaufsteuerungssystem für Güter gemäss Anspruch 8, dadurch gel<ennzeichnet, dass das sel<undäre Transportsystem (80) eine Mehrzahl an autonomen Fahrzeugen umfasst, die auf einer öffentlichen Strasseninfrastrul<tur verl<ehren, wobei die Güter automatisch zwischen den Transporteinheiten (42, 42') und den autonomen Fahrzeugen des sel<undären Transportsystems (80) in den mindestens zwei Zugangsstationen (10, 20) transferiert werden I<önnen.

10. Verfahren für den Transport, die Lagerung und Ablaufsteuerung für Güter unter Verwendung eines Transport-, Lagerungs- und Ablaufsteuerungssystems nach einem der Ansprüche 1 bis 9, umfassend die folgenden Schritte:
a) Annahme der Güter an einer ersten der mindestens zwei Zugangsstationen (10, 20);
b) Transport der Güter von der ersten Zugangsstation zu einer zweiten der mindestens zwei Zugangsstationen (10, 20) unter Benutzung des Transportweges (40);
c) temporäre Lagerung von ausgewählten Transporteinheiten (42 , 42') auf der Servicespur (41c) für eine bestimmte Zeit;
d) Verändern der Abfolge der Transporteinheiten (42, 42') unter Benutzung der Servicespur (41c) in Vorbereitung einer weiteren Abfertigung einer Teilmenge der Transporteinheiten (42, 42') in einer der Zugangsstationen (10, 20) und/oder in einem nachgelagerten Transportverfahren;
e) Bereitstellen der transportierten Güter an der zweiten Zugangsstation (10, 20) für die Abholung oder den Weitertransport.

11. Verfahren gemäss Anspruch 10, gel<ennzeichnet durch die Schritte:
- Empfangen eines Transportauftrags, der einen Abholort, eine Abholzeit, einen Lieferort und eine Lieferzeit definiert; und
- Steuerung des Transports der entsprechenden Güter vom Abholort über eine erste der mindestens zwei Zugangsstationen (10, 20), dem Transportweg (40) und einer zweiten der mindestens zwei Zugangsstationen (10, 20) zum Lieferort, umfassend den Schritt der temporäreren Lagerung der Güter auf der Servicespur (41c) des Transportweges (40) sofern dies zur Einhaltung der Lieferzeit nötig ist.

## Revendications

1. Système de transport, de stockage et de séquencement pour marchandises, comprenant
a) au moins deux stations d'accès (10 ; 20) ;
b) une ligne de transport bidirectionnelle dédiée (40), comprenant deux voies de transport (41a, 41b) pour recevoir une pluralité d'unités de transport (42, 42') se déplaçant dans les deux sens, le long d'un itinéraire de transport reliant les au moins deux stations d'accès (10, 20) ;
c) la ligne de transport (40) comprenant une voie de service (41c) s'étendant le long d'au moins 66 % de l'itinéraire de transport, les unités de transport (42, 42') pouvant être sélectivement détournées entre les voies de transport (41a, 41b) et la voie de service (41c), l'essentiel de la ligne de transport (40) étant logé dans un tunnel souterrain (30), les seules connexions avec la surface (1) étant les au moins deux stations d'accès (10, 20) ;
d) un système de commande pour commander le mouvement de la pluralité d'unités de transport (42, 42') de sorte que
les unités de transport (42, 42') sélectionnées soient temporairement stockées sur la voie de service (41c) pendant un intervalle de temps déterminable ; et/ou
une séquence d'unités de transport (42, 42') soit modifiée à l'aide de la voie de service (41c) en préparation d'un traitement ultérieur d'un sous-ensemble des unités de transport (42, 42') dans l'une des stations d'accès (10, 20) et/ou dans un étage de transport ultérieur,
e) les unités de transport (42, 42') pouvant être commandées pour se déplacer pendant le traitement dans les stations d'accès (10, 20) ;
f) la ligne de transport (40) comprenant une surface d'entraînement (41) et les voies de transport (41a, 41b) et la voie de service (41c) étant disposées côte à côte sur la surface d'entraînement (41) ;
g) les unités de transport (42, 42') étant des véhicules autonomes circulant sur la surface d'entraînement (41),
**caractérisé en ce que**
h) le système de commande comprend des composants pour la commande centralisée ainsi que des composants pour la commande d'unités de transport (42, 42') individuelles qui sont disposés localement sur les unités de transport (42, 42') et qui coopèrent avec les capteurs et les entraînements des unités de transport (42, 42') ;
i) les unités de transport (42, 42') comprennent une réserve d'énergie électrique qui peut être chargée à partir d'une alimentation électrique intégrée dans la surface d'entraînement (41), ladite alimentation électrique étant fournie par des conducteurs inductifs linéaires s'étendant le long des voies de transport (41a, 41b) .

2. Système de transport, de stockage et de séquencement selon la revendication 1, **caractérisé en ce que** le système de commande est conçu pour recevoir un ordre de transport spécifiant un lieu d'enlèvement, une heure d'enlèvement, un lieu de livraison et une heure de livraison, et **en ce que** le système de commande commande un transport de marchandises respectives depuis le lieu d'enlèvement par l'intermédiaire d'une première des au moins deux stations d'accès (10, 20), de la ligne de transport (40) et d'une seconde des au moins deux stations d'accès (10, 20) jusqu'au lieu de livraison, y compris l'étape de stockage temporaire des marchandises sur la voie de service (41c) de la ligne de transport (40) si nécessaire pour respecter l'heure de livraison.

3. Système de transport, de stockage et de séquencement selon la revendication 1 ou 2, **caractérisé en ce que** le stockage temporaire sur la voie de service (41c) est géré par un régime de stockage dynamique en ce qui concerne le choix des zones d'espace de stockage de la voie de service (41c) et des lieux de stockage pour les marchandises dans les zones d'espace de stockage.

4. Système de transport, de stockage et de séquencement selon la revendication 3, **caractérisé en ce que** les au moins deux stations d'accès (10, 20) comprennent un système d'alimentation vertical (70) pour alimenter les unités de transport (42, 42') entre la ligne de transport (40) et une station de transfert sur la surface (1).

5. Système de transport, de stockage et de séquencement selon l'une des revendications 1 à 4, **caractérisé par** une ligne de transport supplémentaire pour le transport de marchandises individuelles de dimensions limitées, indépendant de la ligne de transport bidirectionnelle dédiée (40).

6. Système de transport, de stockage et de séquencement selon la revendication 5, **caractérisé en ce que** la ligne de transport supplémentaire comprend un convoyeur aérien (60) pour le transport de contenants suspendus destinés à recevoir les marchandises individuelles.

7. Système de transport, de stockage et de séquencement selon l'une quelconque des revendications 1 à 6, **caractérisé en ce qu'**une installation de production est intégrée dans l'une des au moins deux stations d'accès (10, 20), des matériaux de base, des consommables, des produits semi-finis et/ou des produits finis étant fournis et retirés par le biais de la ligne de transport (40) .

8. Système de transport, de stockage et de séquencement selon l'une quelconque des revendications 1 à 7, **caractérisé par** un système de transport secondaire (80) fonctionnant sur une infrastructure de transport non dédiée, les marchandises pouvant être transférées entre la ligne de transport (40) et le système de transport secondaire (80) aux au moins deux stations d'accès (10, 20), le système de commande organisant le transport des marchandises le long de la ligne de transport (40) et du système de transport secondaire (80).

9. Système de transport, de stockage et de séquencement selon la revendication 8, **caractérisé en ce que** le système de transport secondaire (80) comprend une pluralité de véhicules autonomes circulant sur une infrastructure de voie publique, les marchandises étant automatiquement transférables entre les unités de transport (42, 42') et les véhicules autonomes du système de transport secondaire (80) au niveau des au moins deux stations d'accès (10, 20).

10. Procédé de transport, de stockage et de séquencement de marchandises à l'aide d'un système de transport, de stockage et de séquencement selon l'une quelconque des revendications 1 à 9, comprenant les étapes consistant à :
a) accepter les marchandises au niveau d'une première des au moins deux stations d'accès (10, 20) ;
b) transporter les marchandises de la première station d'accès à une seconde des au moins deux stations d'accès (10, 20), à l'aide de la ligne de transport bidirectionnelle dédiée (40) ;
c) stocker temporairement les unités de transport (42, 42') sélectionnées sur la voie de service (41c) pendant un intervalle de temps déterminable ;
d) modifier une séquence d'unités de transport (42, 42') à l'aide de la voie de service (41c) en préparation d'un traitement ultérieur d'un sous-ensemble d'unités de transport (42, 42') dans l'une des stations d'accès (10, 20) et/ou dans un étage de transport ultérieur ;
e) fournir les marchandises transportées au niveau de la seconde station d'accès pour leur récupération ou de leur transport ultérieur.

11. Procédé selon la revendication 10, comprenant en outre les étapes consistant à
recevoir un ordre de transport spécifiant un lieu d'enlèvement, une heure d'enlèvement, un lieu de livraison et une heure de livraison ; et
commander le transport des marchandises respectives depuis le lieu d'enlèvement par l'intermédiaire d'une première des au moins deux stations d'accès (10, 20), de la ligne de transport (40) et d'une seconde des au moins deux stations d'accès (10, 20) jusqu'au lieu de livraison, y compris l'étape de stockage temporaire des marchandises sur la voie de service (41c) de la ligne de transport (40) si nécessaire pour respecter l'heure de livraison.
